# EUROPEAN PATENT APPLICATION

(11) **EP 4 221 379 A1**
(43) Date of publication of application: **02.08.2023**
(21) Application number: 20955308.0
(22) Date of filing: 28.09.2020
(51) Int. Cl.: H04W 64/00

(54) **TERMINAL AND BASE STATION**

(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2020/036719
(87) International publication number: WO 2022/064715

(57) **Abstract**

A terminal comprises: a control unit that sets, in a dual connectivity using a first cell group and a second cell group, an information element related to a cell before a change as a variable, when a cell included in the second cell group is changed; and a transmission unit that transmits a message containing the information element set as the variable to the network.

## Description

### [Technical Field]

This disclosure relates to a terminal and a base station for properly collecting the movement history of a UE on the SN side.

### [Background Art]

The 3rd Generation Partnership Project (3GPP) specifies the 5th generation mobile communication system (5G, also called New Radio (NR) or Next Generation (NG), further, a succeeding system called Beyond 5G, 5G Evolution or 6G is being specified.

The 3GPP supports dual connectivity (MR-DC (Multi-RAT Dual Connectivity)) using a first cell group (MCG (Master Cell Group)) and a second cell group (SCG (Secondary Cell Group)). Examples of MR-DCs include EN-DC (E-UTRA-NR Dual Connectivity), NE-DC (NR-EUTRA Dual Connectivity) and NR-DC (NR-NR Dual Connectivity).

In addition, data collection of UE History Information in EN-DC is being considered for purposes such as SON (Self Organizing Network) and MDT (Minimization of Drive Test) (For example, Non-Patent Literature 1).

### [Citation List]

### [Non-Patent Literature]

Non-Patent Literature 1 "New WID on enhancement of data collection for SON/MDT in NR," RP-201281, 3GPP TSG RAN Meeting # 86-e, 3GPP, July 2020

### [Summary of Invention]

Under the above background, the inventors have found the necessity of collecting the movement history of the UE on the SN (Secondary Node) side with the SCG after careful consideration.

Therefore, the following disclosure has been made in view of this situation, and the purpose is to provide terminals and base stations that enable the appropriate collection of the movement history of the UE on the SN side.

One aspect of the disclosure is a terminal comprising: a control unit that sets, in a dual connectivity using a first cell group and a second cell group, an information element related to a cell before a change as a variable, when a cell included in the second cell group is changed; and a transmission unit that transmits a message containing the information element set as the variable to the network.

One aspect of the disclosure is a base station comprising: a transmission unit that transmits, in a case of managing one of a first cell group or a second cell group in dual connectivity using the first cell group and the second cell group, a message containing an information element indicating a change history of a cell included in the second cell group to a node managing another one of the first cell group or the second cell group.

### [Brief Description of Drawings]

[Fig. 1]: Fig. 1 is an overall schematic diagram of radio communication system 10.
[Fig. 2]: Fig. 2 is a functional block diagram of the UE 200.
[Fig. 3]: Fig. 3 is a diagram for illustrating the usage scene.
[Fig. 4]: Fig. 4 is a sequence diagram showing an operation example 1.
[Fig. 5]: Fig. 5 is a diagram showing an example of UEInformation Response (ASN-1 format).
[Fig. 6]: Fig. 6 is a diagram showing an example of VisitedCellInfoListNR (ASN-1 format).
[Fig. 7]: Fig. 7 is a sequence diagram showing an operation example 2.
[Fig. 8]: Fig. 8 is a diagram showing an example of UEAssistanceInformation (ASN-1 format).
[Fig. 9]: Fig. 9 is a sequence diagram showing an operation example 3.
[Fig. 10]: Fig. 10 is a diagram showing an example of ULInformationTransferMRDC (ASN-1 format).
[Fig. 11]: Fig. 11 is a sequence diagram showing an operation example 4.
[Fig. 12]: Fig. 12 is a diagram showing an example of VisitedCellInfoListEN-DC (ASN-1 format).
[Fig. 13]: Fig. 13 is a diagram showing an example of VisitedCellInfoListEN-DC (ASN-1 format).
[Fig. 14]: Fig. 14 is a sequence diagram showing an example of an operation according to Modification Example 2.
[Fig. 15]: Fig. 15 is a sequence diagram showing an example of an operation according to Modification Example 2.
[Fig. 16]: Fig. 16 is a sequence diagram showing an example of an operation according to Modification Example 2.
[Fig. 17]: Fig. 17 is a diagram showing an example of the hardware configuration of the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

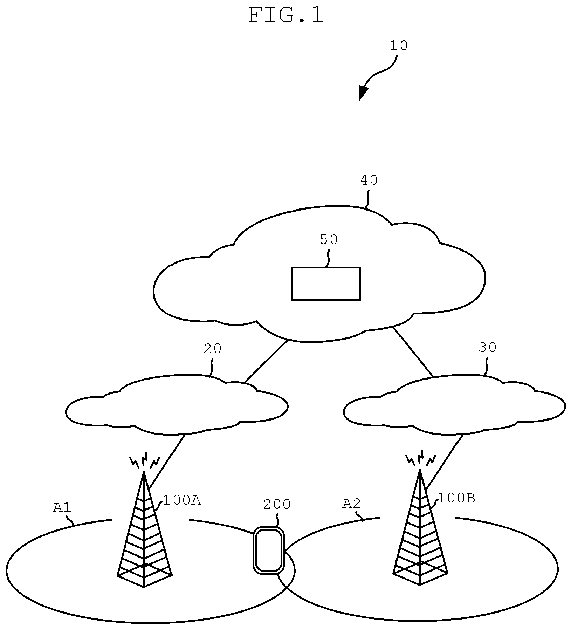

Fig. 1 is an overall schematic diagram of radio communication system 10 according to the embodiment, radio communication system 10 is radio communication system according to Long Term Evolution (LTE) and 5G New Radio (NR). Note that LTE may be called 4G and NR may be called 5G.

Also, LTE and NR may be interpreted as radio access technology (RAT), and in an embodiment, LTE may be referred to as the first radio access technology and NR may be referred to as the second radio access technology.

The radio communication system 10 includes the Evolved Universal Terrestrial Radio Access Network 20 (hereinafter E-UTRAN 20), and the Next Generation-Radio Access Network 30 (Below, NG RAN 30). radio communication system 10 also includes terminal 200 (hereinafter, UE 200, User Equipment).

E-UTRAN 20 includes eNB 100A, a base station in accordance with LTE. NG RAN 30 includes gNB 100B which is a base station according to 5G (NR).

The eNB 100A, gNB 100B and UE 200 can support carrier aggregation (CA) using multiple component carriers (CCs) and dual connectivity (DC) that simultaneously communicates between the UE and each of the multiple Nodes.

E-UTRAN 20 will be connected to core network 40 for LTE. The E-UTRAN 20, NG RAN 30 and core network 40 may be referred to simply as a network.

A management server 50 (OAM Server 50 below; Operation Administration and Management server) may be provided in the core network 40. The OAM server 50 may perform operations related to SON (Self Organizing Network), MDT (Minimization of Drive Test), etc.

The eNB 100A and the gNB 100B may form an area (which may be described as a cell) where radio communication with the UE 200 is feasible, specifically, area A1 or area A2.

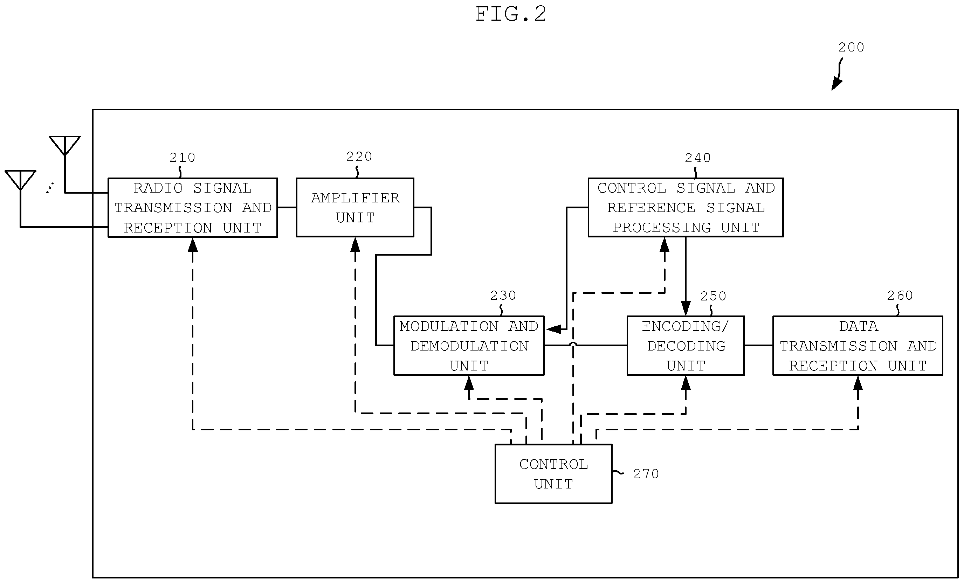

Here, an area A1 may be interpreted as an area where the UE 200 can communicate with the eNB 100A. an area A2 may be interpreted as an area where the UE 200 can communicate with the gNB 100B. The areas A1 and A2 may overlap each other, and in an area where areas A1 and A2 overlap, EN-DC (E-UTRA-NR Dual Connectivity) or NE-DC (NR-EUTRA Dual Connectivity) may be performed in which the UE 200 communicates simultaneously with the eNB 100A and gNB 100B. While Fig. 2 illustrates a case where the base station capable of communicating with the UE 200 in area A1 is the eNB 100A, the base station capable of communicating with the UE 200 in area A1 may be the gNB 100B provided in NG RAN 30. In such a case, NR-DC (NR-NR Dual Connectivity) may be performed in which the UE 200 communicates simultaneously with 2 or more gNB 100B (or cells).

Here, in the DC described above, the group of cells capable of executing processing related to the C-plane (control plane) and the U-plane (user plane) is defined as the first cell group (MCG; Master Cell Group). In the DC described above, the group of cells capable of performing processing on the U-plane (user plane) is defined as the second cell group (SCG; Secondary Cell Group). For example, in the above EN-DC, eNB 100A may be called MN (Master Node) and gNB 100B may be called SN (Secondary Node). In the NE-DC described above, eNB 100A may be called SN and gNB 100B may be called MN.

In the following, EN-DC, NE-DC and NR-DC may be collectively referred to as MR (Multi-RAT) -DC.

### (2)Function block configuration of radio communication system

Next, the functional block configuration of radio communication system 10 will be described. Specifically, the functional block configuration of the UE 200 will be described.

Fig. 2 is a functional block diagram of the UE 200. As shown in Fig. 2, UE 200 comprises a radio signal transmission and reception unit 210, an amplifier unit 220, a modulation and demodulation unit 230, a control signal and reference signal processing unit 240, an encoding/decoding unit 250, a data transmission and reception unit 260 and a control unit 270.

The radio signal transmission and reception unit 210 transmits and receives radio signals in accordance with LTE or NR. The radio signal transmission and reception unit 210 supports Massive MIMO, CA and DC that bundle multiple CCs together.

The amplifier unit 220 will consist of a Power Amplifier (PA), a Low Noise Amplifier (LNA) and other components. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting and resource block allocation for each predetermined communication destination (eNB 100A or gNB 100B). For the modulation and demodulation unit 230, Cyclic Prefix-Orthologous Frequency Division Multiplexing (CP-OFDM)/Discrete Fourier Transform-Spread (DFT-S-OFDM) may be applied. DFT-S-OFDM may also be used for downlink (DL) as well as uplink (UL).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the eNB 100A or gNB 100B via a predetermined control channel, such as control signals of a radio resource control layer (RRC). control signal and the reference signal processing unit 240 also transmits various control signals to the eNB 100A or gNB 100B via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating the fading channel used for data demodulation. PTRS is a terminal-specific reference signal for the purpose of estimating phase noise, which is a problem in high frequency bands.

In addition to DMRS and PTRS, the reference signal may include Channel State Information-Reference Signal (CSI-RS), Sounding Reference Signal (SRS), and Positioning Reference Signal (PRS) for location information.

The channel also includes a control channel and a data channel. Control channels include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channels include PDSCH (Physical Downlink Shared Channel) and PUSCH (Physical Uplink Shared Channel). Data means data transmitted over a data channel. Data channels may be read as shared channels.

Here, the control signal and reference signal processing unit 240 receives downlink control information (DCI). DCI includes fields to store the existing fields, such as DCI Formats, Carrier indicator (CI), BWP indicator, Frequency Domain Resource Allocation (FDRA), Time Domain Resource Allocation (TDRA), Modulation and Coding Scheme (MCS), HARQ Process Number (HPN), New Data Indicator (NDI), and Redundancy Version (RV).

The value stored in the DCI Format field is the information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by the information element (BandWidthPart-Config) contained in the RRC message. The value stored in the FDRA field is an information element that specifies the frequency domain resource to which the DCI applies. Frequency domain resources are identified by the value stored in the FDRA field and the information element (RA Type) contained in the RRC message. The value stored in the TDRA field is an information element that specifies the time domain resource to which the DCI applies. The time domain resource is identified by the value stored in the TDRA field and the information element (pdsch-TimeDomainAllocationList) contained in the RRC message. Time domain resources may be identified by values stored in TDRA fields and default tables. The value stored in the MCS field is an information element that specifies the MCS to which the DCI applies. The MCS is identified by the values stored in the MCS and the MCS table. MCS tables may be specified by RRC messages or identified by RNTI scrambling. The value stored in the HPN field is an information element that specifies the HARQ Process to which the DCI applies. The value stored in the NDI is an information element for identifying whether the data to which the DCI is applied is first-time data. The value stored in the RV field is the information element that specifies the redundancy of the data to which the DCI applies.

In the embodiment, the control signal and reference signal processing unit 240 constitutes a transmission unit that transmits a message containing information elements set as variables. The variable is the variable in which the information element about the pre-change PSCell is set when the cell (For example, PSCell (Primary-Secondary Cell)) included in the SCG is changed in the MR-DC. The variable may be called varMobilityHistoryReport. The variable may be called the visitedCellInfoList contained in the varMobilityHistoryReport. The message containing the visitedCellInfoList may be an RRC message. Messages containing a visitedCellInfoList may contain a UEInformationResponse sent in response to a UEInformationRequest. A message containing a visitedCellInfoList may contain UEAssistanceInformation that autonomously transmitted by the UE 200.

The encoding/decoding unit 250 performs data division/concatenation and channel coding/decoding for each predetermined communication destination (eNB 100A or gNB 100B).

Specifically, the encoding/decoding unit 250 divides the data output from the data transmission and reception unit 260 into predetermined sizes and performs channel coding on the divided data. The encoding/decoding unit 250 decodes the data output from the modulation and demodulation unit 230 and concatenates the decoded data.

The data transmission and reception unit 260 transmits and receives Protocol Data Units (PDU) and Service Data Units (SDU). Specifically, the data transmission and reception unit 260 performs such tasks as assembling/disassembling PDUs/SDUs in multiple layers (Media access control layer (MAC), radio link control layer (RLC), and packet data convergence protocol layer (PDCP), etc.). The data transmission and reception unit 260 also performs error correction and retransmission control of data based on hybrid automatic repeat requests (ARQs).

The control unit 270 controls each functional block comprising the UE 200. In the embodiment, the control unit 270 constitutes a control unit that sets an information element about the pre-change PSCell as a variable when the cell (For example, PSCell (Primary-Secondary Cell)) contained in the SCG is changed in the MR-DC. As mentioned above, the variable may be referred to as varMobilityHistoryReport or visitedCellInfoList.

### (3)Applied Scene

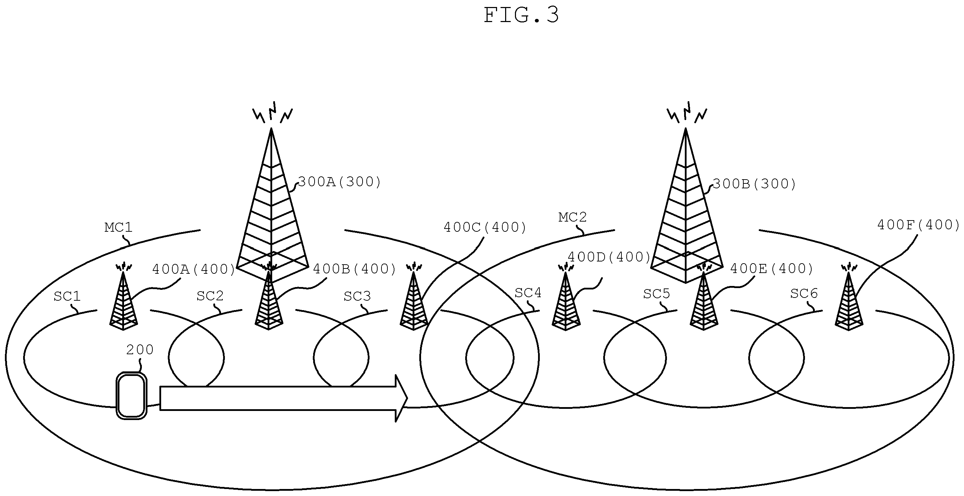

The application scene of the embodiment will be described below. In the application scene, we describe a case where PSCell changes are executed in an MR-DC where the UE 200 communicates with the MN 300 and SN 400. In Fig. 3, MN 300 A and MN 300 B are illustrated as MN 300, and SN 400 A to SN 400 F are illustrated as SN 400. MC1 and MC2 are illustrated as cells possessed by MN 300, and SC1 to SC6 are illustrated as cells possessed by SN 400. For example, the coverage area of SC1 to SC3 overlaps with that of MC1, and the coverage area of SC4 to SC6 overlaps with that of MC2. In such cases, MC1 and MC2 are cells that can be used as PCells (primary cells), and SC1-SC6 are cells that can be used as PSCells.

Under these assumptions, we consider a case where the UE 200 moves from SC 1 to SC 3. For example, PSCell may be changed from SC1 to SC2 with MC1 being used as the PCell. Furthermore, the PSCell may be changed from SC2 to SC3 with MC1 being used as the PCell.

In such a case, the UE 200 sets the information element about SC1 before the change as a visitedCellInfoList when the PSCell is changed from SC1 to SC2. In addition, the UE 200 may set the information element for SC2 before the change as a visitedCellInfoList when the PSCell is changed from SC2 to SC3. The information element about the cell may include a CGI (Cell Global Identify) that uniquely identifies the cell in radio communication system 10. The information element about the cell may include PCI (Physical Cell Identify) which uniquely identifies the cell at SN 400. The information element about the cell may include an absolute radio-frequency channel number (ARFCN) that identifies the frequency of the cell.

In addition, the UE 200 transmits a message containing a visitedCellInfoList to the network. The UE 200 may transmit a message containing a visitedCellInfoList to the MN 300. The UE 200 may transmit a message containing a visitedCellInfoList to SN 400 via MN 300. The UE 200 may transmit a message containing a visitedCellInfoList to SN 400 without intervening the MN 300.

### (4)Example of operation

An example of operation of the embodiment will be described below. The following is an example of a case where EN-DC is executed as MR-DC. That is, the case in which eNB 100A contained in E-UTRAN 20 is MN 300 and gNB 100B contained in NG RAN 30 is SN 400 is exemplified. However, the embodiment is not limited to this. The MR-DC may be NE-DC or NR-DC.

### (4.1) Operation Example 1

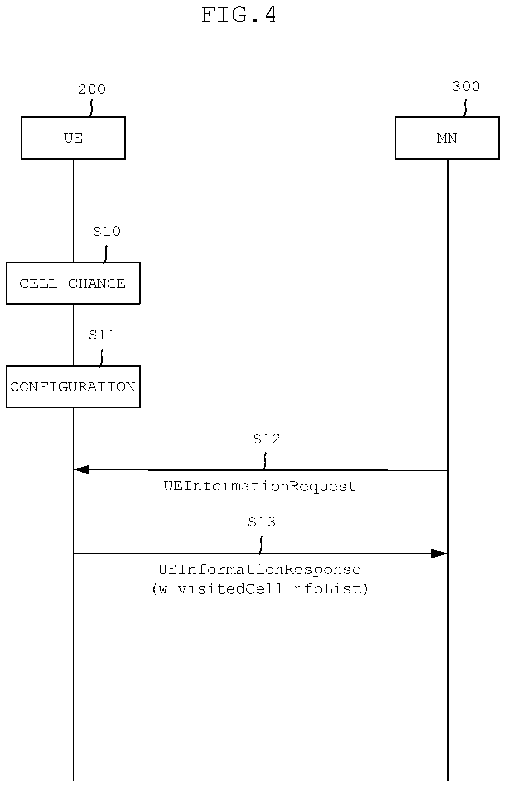

The following describes a case in which a message containing a visitedCellInfoList is sent to MN 300. Fig. 4 is a sequence diagram showing operation example 1.

As shown in Fig. 4, in step S10, the UE 200 detects a change in the PSCell included in the SCG in the EN-DC.

In step S11, the UE 200 sets the information element about the PSCell before the change as a visitedCellInfoList.

In step S12, the UE 200 receives a UEInformationRequest from the MN 300. A UEInformationRequest may include an information element that explicitly requests a visitedCellInfoList. The UEInformationRequest may include an information element that explicitly requests a mobilityHistoryReport or mobilityHistoryReportOfPScell.

In step S13, the UE 200 transmits the UEInformationResponse to the MN 300. The UEInformationResponse contains a visitedCellInfoList populated with information elements about the PSCell before the change. If more than one PSCell change has been performed, the visitedCellInfoList may contain information elements about two or more PSCells prior to the change.

Since the visitedCellInfoList is notified to the MN 300 in operation example 1, the visitedCellInfoList is encoded as an information element related to the E-UTRAN 20 in step S13.

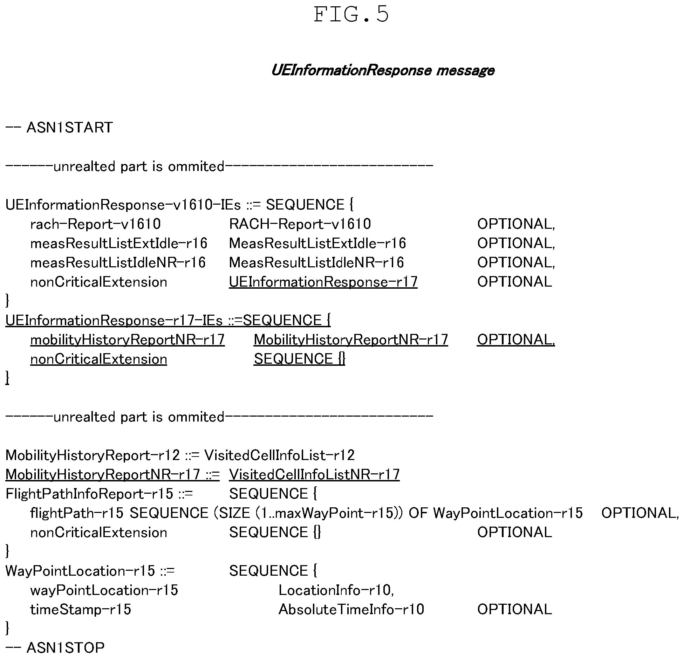

As shown in Fig. 5, the UEInformationResponse may include UEInformationResponse-r17-IEs. UEInformationResponse-r17-IEs may include mobilityHistoryReportNR-r17. The mobilityHistoryReportNR-r17 may include the VisitedCellInfoListNR-r17. Note that mobilityHistoryReportNR-r17 may be an example of an information element that indicates the change history of PSCell included in the SCG.

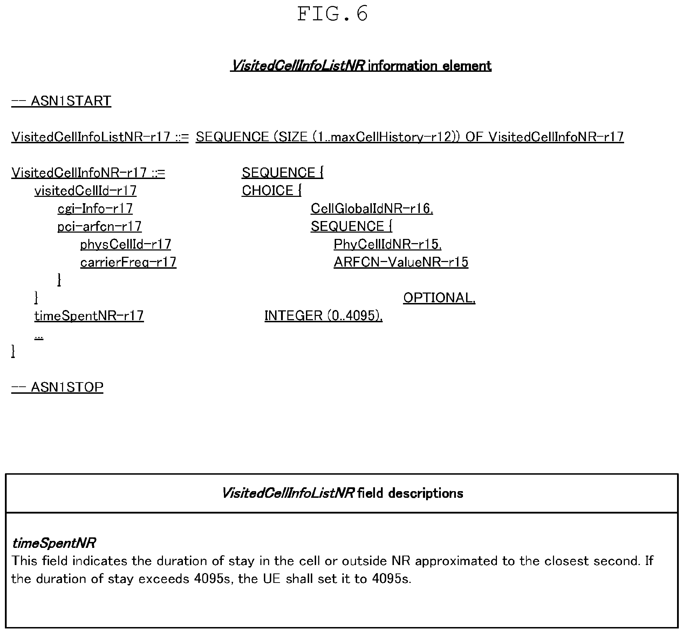

As shown in Fig. 6, a VisitedCellInfoListNR (VisitedCellInfoListNR-r17) may include a visitedCellInfoNR-r17 (That is, information elements about PSCell before the change). visitedCellInfoNR-r17 (That is, the identity of the PSCell before the change). The visitedCellID-r17 may contain cgi-Info-r17 (That is, PSCell's CGI) or pci-arfcn-r17 (PCI and ARFCN for PSCell).

Here, the visitedCellInfoNR-r17 may include an information element (timeSpentNR-r17) that indicates how long the UE 200 has been in the PSCell before the change.

It should be noted that since operation example 1 illustrates a case of transmitting visitedCellInfoListNR to MN 300 (eNB 100A) in EN-DC, the message and information elements related to E-UTRAN 20 are illustrated in Figs 5 and 6.

### (4.2) Example 2

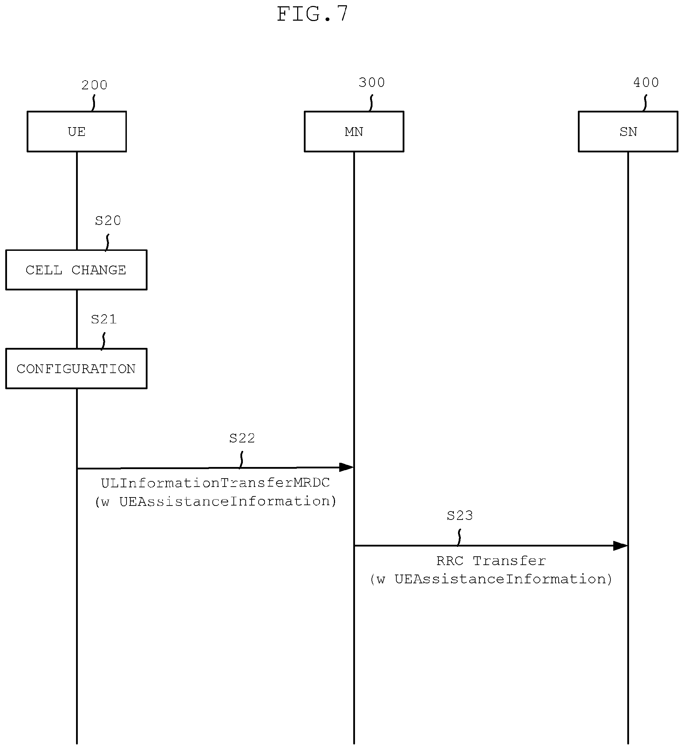

The following describes a case in which a message containing a visitedCellInfoList is sent to SN 400 via MN 300. Fig. 7 is a sequence diagram showing operation example 2.

As shown in Fig. 7, in step S20, the UE 200 detects a change in the PSCell included in the SCG in the EN-DC.

In step S21, the UE 200 sets the information element about the PSCell before the change as a visitedCellInfoList.

In step S22, the ULInformationTransferMRDC is transmitted to the MN 300. ULInformationTransferMRDC contains UEAssistanceInformation, and UEAssistanceInformation contains a visitedCellInfoList with information elements about the PSCell before the change. If more than one PSCell change has been performed, the visitedCellInfoList may contain information elements about two or more PSCells prior to the change.

In operation example 2, the visitedCellInfoList is transparently notified to SN 400, so in step S22, the visitedCellInfoList is encoded as an information element related to NG RAN 30.

In step S23, the MN 300 transmits RRC Transfer to SN 400. RRC Transfer contains the visitedCellInfoList contained in UEAssistanceInformation.

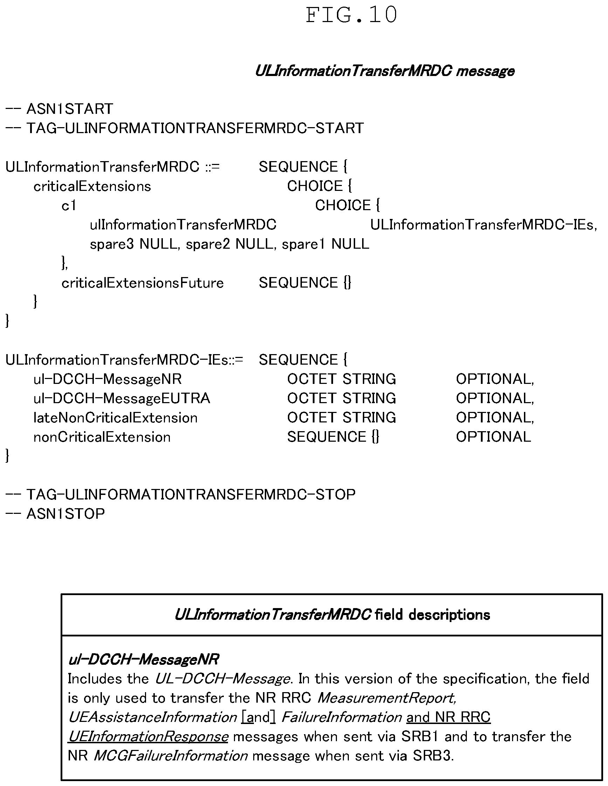

As described below, ULInformationTransferMRDC contains ul-DCCH-MessageNR. ul-DCCH-MessageNR is the information element used to forward the RRC message for NG RAN 30, and the RRC message for NG RAN 30 contains UEAssistanceInformation (see Fig. 10).

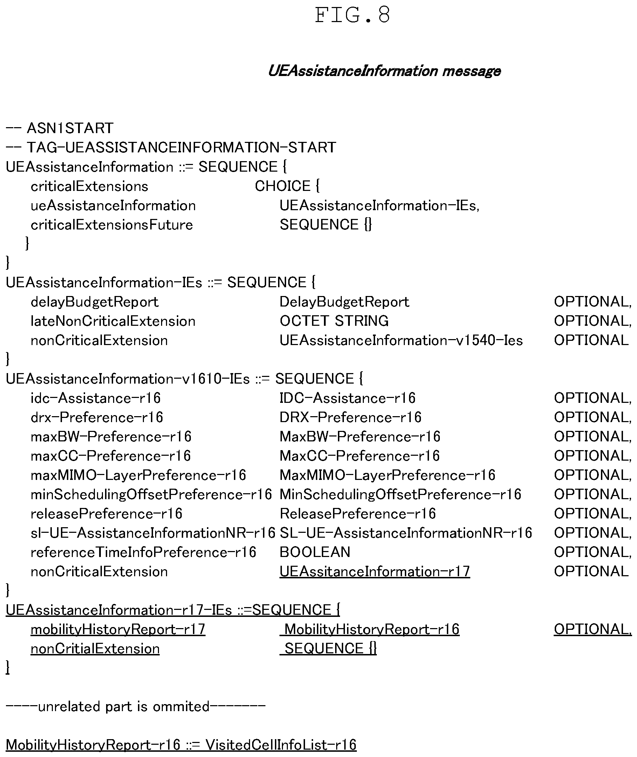

As shown in Fig. 8, UEAssistanceInformation may include UEAssistanceInformation-r17-IEs. UEAssistanceInformation-r17-IEs may include mobilityHistoryReport-r17. The mobilityHistory Report-r17 may include mobilityHistory Report-r 16. The mobilityHistoryReport - r 16 may include the VisitedCellInfoList -r 16. Note that mobilityHistoryReport-r17 may be an example of an information element that indicates the change history of PSCell included in the SCG. The VisitedCellInfoList-r 16 may also include the CGI, PCI and ARFCN of the PSCell prior to the change, similar to the VisitedCellInfoListNR-r17. The VisitedCellInfoList-r16 may include an information element (timeSpent) indicating how long the UE 200 has been in the PSCell before the change.

Here, it should be noted that operation example 2 illustrates a case in which a visitedCellInfoList is transmitted transparently to SN 400 (gNB 100B) in EN-DC, so that a message about NG RAN 30 is illustrated in Fig. 8.

### (4.3) Example 3

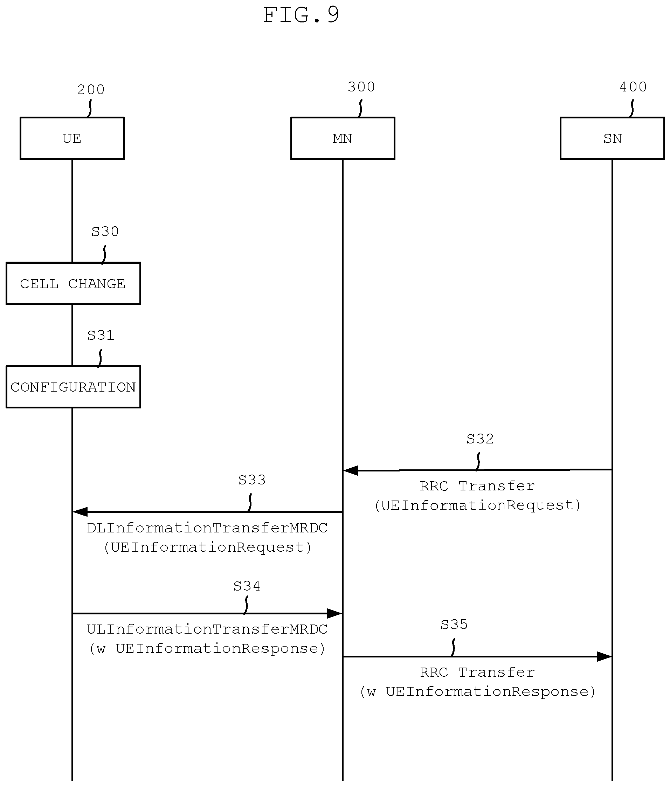

The following describes a case in which a message containing a visitedCellInfoList is sent to SN 400 via MN 300. Fig. 9 is a sequence diagram showing operation example 3.

As shown in Fig. 9, in step S30, the UE 200 detects a change in the PSCell included in the SCG in the EN-DC.

In step S31, the UE 200 sets the information element about the PSCell before the change as a visitedCellInfoList.

In step S32, the MN 300 receives the RRC Transfer from the SN 400. The RRC Transfer may include a UEInformationRequest, and the UEInformationRequest may include an information element that explicitly requests a visitedCellInfoList. The UEInformationRequest may include an information element that explicitly requests a mobilityHistoryReport or mobilityHistoryReportOfPScell.

In step S33, the MN 300 transmits the DLInformationTransferMRDC to the UE 200. The DLInformationTransferMRDC contains the UEInformationRequest contained in the RRC Transfer.

In step S34, the UE 200 transmits the ULInformationTransferMRDC to the MN 300. ULInformationTransferMRDC contains UEInformationResponse, which contains a visitedCellInfoList with information elements about the PSCell before the change. If more than one PSCell change has been performed, the visitedCellInfoList may contain information elements about two or more PSCells prior to the change.

In operation example 3, the visitedCellInfoList is transparently notified to SN 400, so in step S33, the visitedCellInfoList is encoded as an information element related to NG RAN 30.

In step S35, the MN 300 transmits RRC Transfer to SN 400. RRC Transfer includes the visitedCellInfoList included in the UEInformationResponse.

As shown in Fig. 10, the ULInformationTransferMRDC contains ul-DCCH-MessageNR. ul-DCCH-MessageNR is the information element used to forward the RRC message for NG RAN 30, and the RRC message for NG RAN 30 contains the UEInformationResponse.

Here, it should be noted that operation example 3 illustrates a case where the MN 300 (eNB 100A) receives the ULInformationTransferMRDC in the EN-DC, and therefore, the message about the E-UTRAN 20 is illustrated in Fig. 10.

### (4.4) Operation Example 4

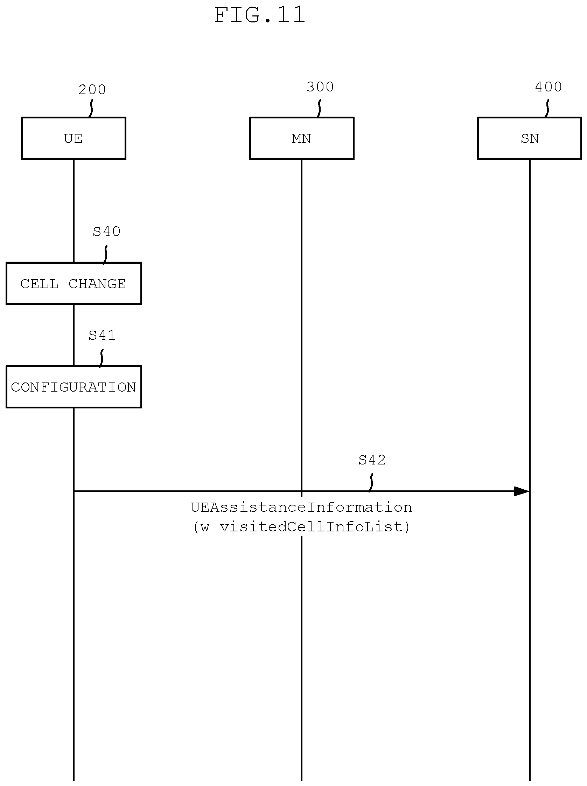

The following describes a case in which a message containing a visitedCellInfoList is sent to SN 400 without intervening MN 300. Fig. 11 is a sequence diagram showing operation example 4. In Fig. 11, an example is given in which SRB 3 is set to UE 200. SRB 3 is a signaling radio bearer (SRB) for transmitting a measurement report (RRC Measurement Report) on NR directly from UE 200 to SN 400 (gNB 100B) in EN-DC.

As shown in Fig. 11, in step S40, the UE 200 detects a change in the PSCell included in the SCG in the EN-DC.

In step S41, the UE 200 sets the information element about the PSCell before the change as a visitedCellInfoList.

In step S42, the UEAssistanceInformation is directly transmitted to SN 400. UEAssistanceInformation contains a visitedCellInfoList with information elements about the PSCell before the change. If more than one PSCell change has been performed, the visitedCellInfoList may contain information elements about two or more PSCells prior to the change.

In operation example 4, the visitedCellInfoList is directly notified to SN 400, so in step S42, the visitedCellInfoList is encoded as an information element related to NG RAN 30.

### (5)Operational effects

In the embodiment, when a PSCell is changed, the UE 200 sets an information element about the PSCell before the change as a variable (visitedCellInfoList) and transmits a message to the network (MN 300 or SN 400) containing the information element (PSCell CGI, PSCell PCI, PSCell ARFCN, timeSpent, etc.) set as the variable. With such a configuration, the network (MN 300 or SN 400) can grasp the change history (In other words, the movement history of the UE 200) of the PSCell in the MR-DC and can set the mobility parameter for SN 400 appropriately. For example, the mobility parameter for SN 400 might be a threshold that is compared to the received quality (RSRP; Reference Signal Received Power, RSRQ; Reference Signal Received Quality) to determine PSCell changes.

For example, for Event A3 (TS38.331 V 16.1.0 section 5.5.4.4 "Neighbour becomes offset better than SpCell"), the mobility parameter may include TimeToTrigger, a3-offset, hysteresis, etc. For Event A5 (TS38.331 V 16.1.0 section 5.5.4.6 "SpCell becomes worse than threshold 1 and neighbor becomes better than threshold 2"), the mobility parameter may include TimeToTrigger, a5-Thresholdl, a5-Threshold2, hysteresis, etc. For Event B1-NR (TS38.331 V 16.1.0 section 5.5.4.8 "Inter RAT neighbor becomes better than threshold"), the mobility parameter may include TimeToTrigger, b1-ThresholdNR, hysteresis, etc. For Event B2-NR (TS38.331 V 16.1.0 section 5.5.4.9 "PCell becomes worse than threshold 1 and inter RAT neighbor becomes better than threshold 2"), the mobility parameter may include TimeToTrigger, b2-Threshold1, b2-Threshold2NR, hysteresis, etc.

In particular, in EN-DC, since eNB 100A (MN 300) can grasp the change history of PSCell on the NR side, eNB 100A (MN 300) can appropriately set the mobility parameter for SN 400 on the NR side (For example, operation example 1 described above). Since the gNB 100B (SN 400) can understand the change history of the PSCell on the NR side, the gNB 100B (SN 400) can appropriately set the mobility parameter for SN 400 on the NR side (For example, operation example 2 to operation example 4 described above).

### [Modified Example 1]

A modification of the first embodiment will be described below. The differences with respect to the embodiment are mainly described below.

In the embodiment, the information element about the PSCell before the change is set as a variable. On the other hand, in Modified Example 1, the UE 200 sets the information element related to PSCell used in the MR-DC as a variable by associating it with the information element related to PCell used in the MR-DC. In other words, the UE 200 transmits a message to the network by associating the information element about the PSCell before the change with the information element about the PCell.

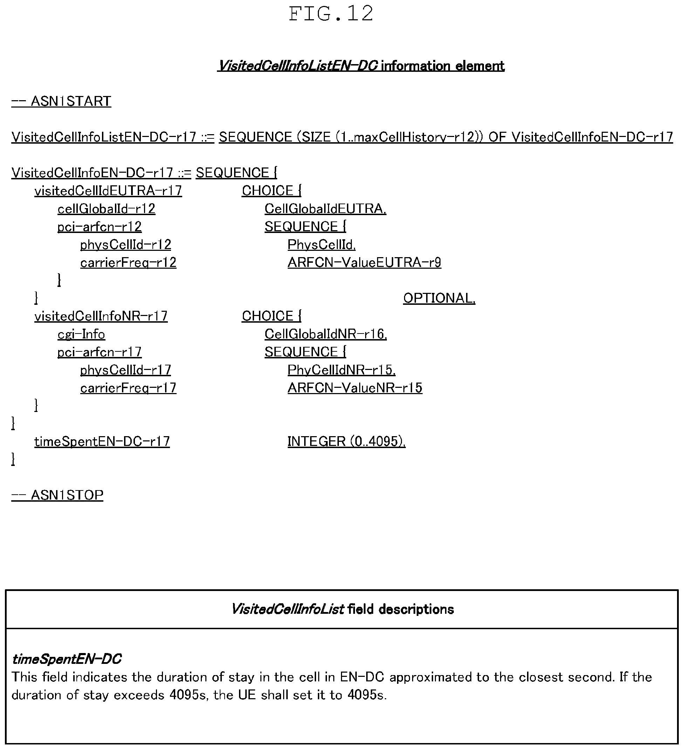

The variable used in Example 1 may be called VisitedCellInfoListEN-DC. As shown in Fig. 12, the VisitedCellInfoListEN-DC (VisitedCellInfoListEN-DC-r17) may include an information element about the PCell used in the EN-DC (visitedCellIdEUTRA-r17) and an information element about the PSCell used in the EN-DC (visitedCellInfoNR-r17).

The information element for PCell (visitedCellIdEUTRA-r17) may contain at least one of PCell's CGI (cellGlobalId-r 12) and PCell's PCI/ARFCN (pci-arfcn-r 12). The information element for PSCell (visitedCellInfoNR-r17) may contain at least one of PSCell's CGI (cgi-Info) and PSCell's PCI/ARFCN (pci-arfcn-r17).

In addition, the VisitedCellInfoListEN-DC may include an information element (timeSpentEN-DC-r17) that indicates how long the UE 200 has been in the cells (PCell and PSCell) of the EN-DC.

It should be noted that, since operation example 1 illustrates a case of transmitting a visitedCellInfoList to MN 300 (eNB 100A) in EN-DC, information elements related to E-UTRAN 20 are illustrated in Fig. 12.

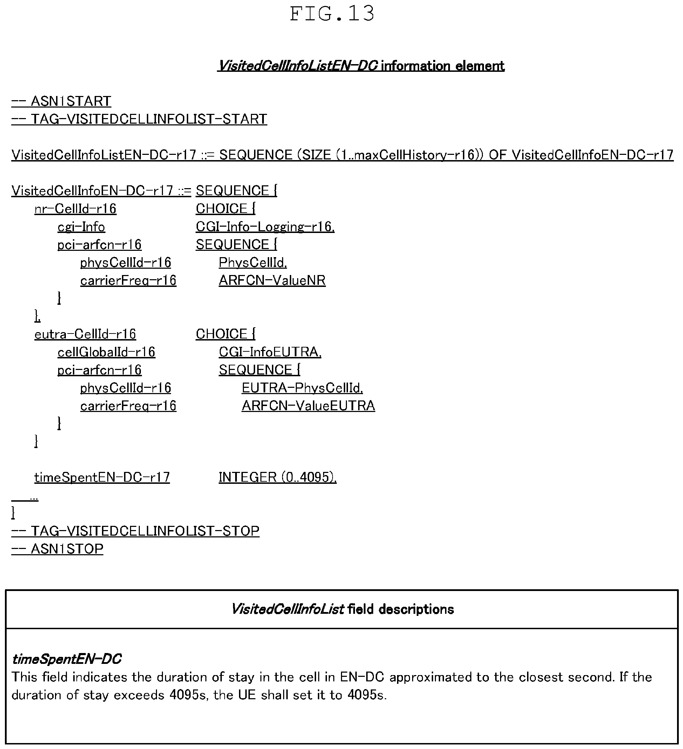

The variable used in either Example 2 through Example 4 may be referred to as VisitedCellInfoListEN-DC. As shown in Fig. 13, VisitedCellInfoListEN-DC (VisitedCellInfoListEN-DC-r17) may include an information element about PSCell used in EN-DC (nr-CellId-r 16) and an information element about PCell used in EN-DC (eutra-CellId-r 16) .

The information element for PSCell (nr-CellId-r 16) may contain at least one of PSCell's CGI (cgi-Info) and PSCell's PCI/ARFCN (pci-arfcn-r 16). The information element for PCell (eutra-CellId-r 16) may contain at least one of PCell's CGI (cgi-Info) and PCell's PCI/ARFCN (pci-arfcn-r 16).

In addition, the VisitedCellInfoListEN-DC may include an information element (timeSpentEN-DC-r17) that indicates how long the UE 200 has been in the cells (PCell and PSCell) of the EN-DC.

Note that operation examples 2 to 4 illustrate a case in which a visitedCellInfoList is transmitted transparently or directly to SN 400 (gNB 100B) in EN-DC, so it should be noted that information elements related to NG RAN 30 are illustrated in Fig. 13.

In Modified Example 1, the UE 200 sends a message to the network (MN 300 or SN 400) by associating the information element about the PSCell before the change with the information element about the PCell. With such a configuration, the network (MN 300 or SN 400) can understand the PSCell in the MR-DC in relation to the PCell and can further appropriately understand the movement history of the UE 200.

### [Modified Example 2]

The second modification of the embodiment will be described below. The differences with respect to the embodiment are mainly described below.

In Modified Example 2, when managing either the MCG or the SCG in the MR-DC, the base station is equipped with an transmission unit that transmits a message containing the change history (For example, MobilityHistoryReport) of a cell (PSCell) included in the SCG to a node managing either the MCG or the SCG. The Mobility History Report contains information elements (visitedCellInfoList (SN)) about PSCell for use in MR-DC.

Specifically, if the SN 400 manages the change history of the PSCell included in the SCG, the SN 400 may transmit a message containing an information element (visitedCellInfoList (SN)) about the PSCell used in the MR-DC to the MN 300. Alternatively, if the MN 300 manages the change history of the PSCell included in the SCG, the MN 300 may transmit a message containing an information element (visitedCellInfoList (SN)) about the PSCell used in the MR-DC to the SN 400.

Furthermore, the MN 300 may manage the change history of the PCell used in the MR-DC. In such a case, the MN may transmit a message to SN 400 containing an information element (visitedCellInfoList (MN)) about the PCell used in the MR-DC.

Here, the PCell change history used in MR-DC may include PCell CGI, Cell type (cell size), Time UE Stayed In Cell, HO (Handover) cause value, and Time stamp. Information elements about PCells used in MR-DC (visitedCellInfoList (MN)) may include these information elements. The time stamp is an information element for correlating the PCell change history (visitedCellInfoList (MN)) with the PSCell change history (visitedCellInfoList (SN)). The time stamp may be an information element indicating the time when the PCell was changed.

Similarly, the PSCell change history used in MR-DC may include PSCell CGI, Cell type (cell size), Time spent in PSCell, and Time stamp. Information elements (visitedCellInfoList (SN)) about PSCell used in MR-DC may include these information elements. The time stamp is an information element for correlating the PCell change history (visitedCellInfoList (MN)) with the PSCell change history (visitedCellInfoList (SN)). The time stamp may be an information element indicating the time at which the PSCell was changed. Note that the time spent in PSCell may be the time when the UE 200 stays in the PSCell, the time from the establishment of the MR-DC to the release of the MR-DC, or the time from the establishment of the previous PSCell to the establishment of the next PSCell when the PSCell is changed.

An example of the operation in relation to example 2 of the modification is described below. The following is an example of a case where EN-DC is executed as MR-DC. That is, the case in which eNB 100A contained in E-UTRAN 20 is MN 300 and gNB 100B contained in NG RAN 30 is SN 400 is exemplified. However, the embodiment is not limited to this. The MR-DC may be NE-DC or NR-DC.

First, we describe a case in which a message containing an information element (visitedCellInfoList (SN)) about the PSCell used in the MR-DC is sent from SN 400 to MN 300. In such a case, SN 400 manages information elements (visitedCellInfoList (SN)) about PSCell used in MR-DC. The SN 400 may manage the visitedCellInfoList (SN) by the methods of Operation Example 2 to Operation Example 4 described in the embodiment. Here, we describe a case in which the MN 300 starts operating.

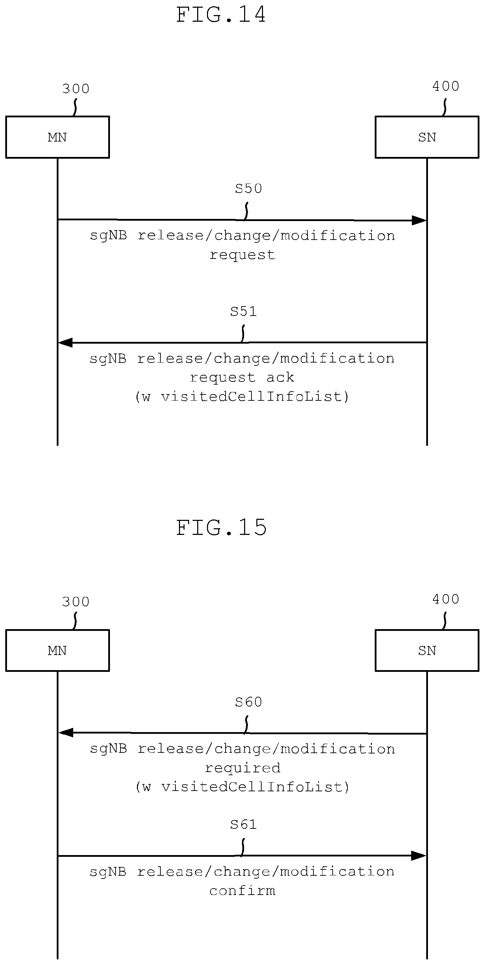

As shown in Fig. 14, in step S50, the MN 300 transmits to the SN 400 either one of a message requesting the release of SN 400 (i.e. gNB 100B) (sgNB release request), a message requesting the change of SN 400 (sgNB change request), or a message requesting the modification of SN 400 (sgNB modification request).

In step S51, the SN 400 transmits a response message to the message received in step S50 to the MN 300. The response message is a response message to a sgNB release request (sgNB release request ack), a response message to a sgNB change request (sgNB change request ack), or a response message to a sgNB modification request (sgNB modification request ack). The response message contains an information element (visitedCellInfoList (SN)) about the PSCell used in the MR-DC. MN 300 may associate PCell with PSCell based on the PCell change history and the time stamp contained in the information element about PSCell (visitedCellInfoList (SN)).

Second, we describe a case in which a message containing an information element (visitedCellInfoList (SN)) about the PSCell used in the MR-DC is sent from SN 400 to MN 300. In such a case, SN 400 manages information elements (visitedCellInfoList (SN)) about PSCell used in MR-DC. The SN 400 may manage the visitedCellInfoList (SN) by the methods of Operation Example 2 to Operation Example 4 described in the embodiment. Here, we describe a case in which SN 400 starts operating.

As shown in Fig. 15, in step S60, the SN 400 transmits to the MN 300 either one of a message requesting the release of SN 400 (i.e. gNB 100B) (sgNB release required), a message requesting the change of SN 400 (sgNB change required) or a message requesting the modification of SN 400 (sgNB modification required). The message shown in step S60 contains an information element (visitedCellInfoList (SN)) about the PSCell used in the MR-DC.

In step S61, the MN 300 transmits SN 400 a response message to the message received in step S60. The response message is a response message to sgNB release required confirm, a response message to sgNB change required confirm, or a response message to sgNB modification required confirm. The response message contains an information element (visitedCellInfoList (SN)) about the PSCell used in the MR-DC. MN 300 may associate PCell with PSCell based on the PCell change history and the time stamp contained in the information element about PSCell (visitedCellInfoList (SN)).

Fig. 15 illustrates a case in which the information element (visitedCellInfoList (SN)) about PSCell used in MR-DC is included in the message shown in step S60. However, the sequence shown in Fig. 15 is not limited to this. For example, after receiving the message shown in step S60, the MN 300 may transmit a message requesting an information element (visitedCellInfoList (SN)) about the PSCell to be used in the MR-DC to SN 400 and receive a message containing an information element (visitedCellInfoList (SN)) about the PSCell from SN 400.

Third, a case is described in which a message containing an information element (visitedCellInfoList (SN)) about PSCell used in MR-DC is sent from MN 300 to SN 400. In such a case, the MN 300 manages the information element (visitedCellInfoList (SN)) about the PSCell used in the MR-DC. The MN 300 may manage the visitedCellInfoList (SN) in the manner of working example 1 described in the embodiment.

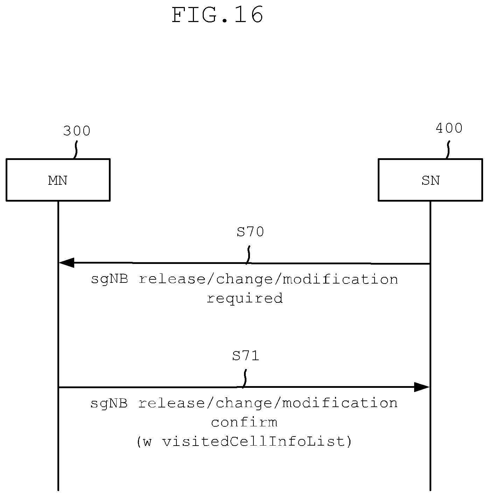

As shown in Fig. 16, in step S70, the SN 400 transmits to the MN 300 either one of a message requesting the release of SN 400 (i.e. gNB 100B) (sgNB release required), a message requesting the change of SN 400 (sgNB change required) or a message requesting the modification of SN 400 (sgNB modification required).

In step S71, the MN 300 transmits SN 400 a response message to the message received in step S70. The response message is a response message to sgNB release required confirm, a response message to sgNB change required confirm, or a response message to sgNB modification required confirm. The response message contains an information element (visitedCellInfoList (SN)) about the PSCell used in the MR-DC.

In Modified Example 2, we mainly explained the PSCell information element (visitedCellInfoList (SN)) used in MR-DC. However, Modification Example 2 is not limited to this. For example, if SN 400 manages the change history of the PSCell used in the MR-DC, MN 300 may transmit a message to SN 400 containing an information element (visitedCellInfoList (MN)) about the PCell used in the MR-DC. The message containing the information element about the PCell (visitedCellInfoList (MN)) may be the message shown in step S50 of Fig. 14 (sgNB release/change/modification request) or the message shown in step S61 of Fig. 15 or step S71 of Fig. 16 (sgNB release/change/modification confirm). SN 400 may associate PCell with PSCell based on the change history of PSCell and the time stamp included in the information element about PCell (visitedCellInfoList (MN)) .

According to Modified Example 2, the network (MN 300 or SN 400) can collect the change history (For example, MobilityHistoryReport) of PSCell, and the mobility parameter for SN 400 can be set appropriately. In turn, SCG change ping-pong and connection failures can be suppressed.

According to Modification Example 2, the information element about the PCell used in the MR-DC (visitedCellInfoList (MN)) or the information element about the PSCell used in the MR-DC (visitedCellInfoList (SN)) includes a time stamp for mapping them. Therefore, PCell and PSCell can be appropriately associated in MR-DC.

### [Other Embodiments]

Although the above description of the embodiment is not limited to the description of the embodiment, it is obvious to those skilled in the art that various modifications and improvements are possible.

In the embodiment, EN-DC is mainly illustrated as an example of MR-DC. However, the embodiment is not limited to this. The MR-DC may be NE-DC or NR-DC. In NE-DC, since SRB 3 is not set to UE 200, operation example 3 described in the embodiment may not be used.

In addition, the block diagram (Fig. 2) used for the explanation of the above embodiment shows a block of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

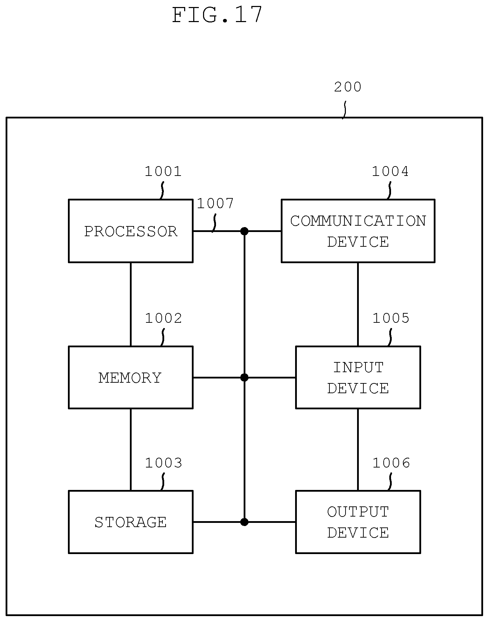

In addition, the aforementioned UE 200, eNB 100A and gNB 100B (such equipment) may function as a computer for processing the radio communication method of this disclosure. Fig. 17 shows an example of the hardware configuration of the device. As shown in Fig. 17, the device may be configured as a computer device including a processor 1001, a memory 1002, a storage 1003, a communication device 1004, an input device 1005, an output device 1006 and a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 2) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001, for example, operates an operating system to control the entire computer. The processor 1001 may consist of a central processing unit (CPU) including interfaces to peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. The memory 1002 can store programs (program code), software modules, etc., that can execute a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. Bus 1007 may be configured using a single bus or different buses between devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

In addition, notification of information is not limited to the mode/embodiment described in this disclosure and may be made using other methods. For example, notification of information may be performed by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, for example, an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative sequence to present elements of various steps and is not limited to the specific sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, airplanes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

In addition, base stations in this disclosure may be read as mobile stations (user terminal, hereinafter the same). For example, each aspect/embodiment of this disclosure may be applied to a configuration in which communication between a base station and a mobile station is replaced by communication between multiple mobile stations (For example, it may be called Device-to-Device (D2D), Vehicle-to-Everything (V2X), etc.). In this case, the mobile station may have the function of the base station. In addition, phrases such as "up" and "down" may be replaced with phrases corresponding to communication between terminals (For example, "side"). For example, terms an uplink channel, a downlink channel, or the like may be read as a side channel.

Similarly, mobile stations in this disclosure may be read as base stations. In this case, the base station may have the function of the mobile station. A radio frame may be composed of one or more frames in the time domain. Each frame or frames in the time domain may be referred to as a subframe. A subframe may be further configured by one or more slots in the time domain. The subframe may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be called a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1 -13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
20 E-UTRAN
30 NG RAN
40 Core network
50 E-SMLC
100A eNB
100B gNB
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input Device
1006 Output Device
1007 Bus

## Claims

1. A terminal comprising:
a control unit that sets, in a dual connectivity using a first cell group and a second cell group, an information element related to a cell before a change as a variable, when a cell included in the second cell group is changed; and
a transmission unit that transmits a message containing the information element set as the variable to the network.

2. The terminal according to claim 1, wherein
the transmission unit transmits the message to a first node that manages the first cell group.

3. The terminal according to claim 1, wherein
the transmission unit transmits the message to a second node that manages the second cell group via a first node that manages the first cell group, or transmits the message to a second node that manages the second cell group without intervening a first node that manages the first cell group.

4. The terminal according to any one of claims 1 to 3, wherein
the control unit sets the information element related to the cell before the change as the variable in association with an information element related to the cell included in the first cell group.

5. A base station comprising:
a transmission unit that transmits, in a case of managing one of a first cell group or a second cell group in dual connectivity using the first cell group and the second cell group, a message containing an information element indicating a change history of a cell included in the second cell group to a node managing another one of the first cell group or the second cell group.
